(19) **Europäisches Patentamt / European Patent Office / Office européen des brevets**

(11) **EP 3 811 109 B1**

(12) **FASCICULE DE BREVET EUROPEEN**

(45) Date de publication et mention de la délivrance du brevet:
**04.01.2023  Bulletin 2023/01**

(21) Numéro de dépôt: **19733682.9**

(22) Date de dépôt: **13.06.2019**

(51) Classification Internationale des Brevets (IPC):
**G01S 13/50** (2006.01)   **G01S 13/88** (2006.01)
**G01S 7/292** (2006.01)   **G01S 7/41** (2006.01)

(52) Classification Coopérative des Brevets (CPC):
**G01S 13/50; G01S 7/2923; G01S 7/41; G01S 13/88**

(86) Numéro de dépôt international:
**PCT/EP2019/065557**

(87) Numéro de publication internationale:
**WO 2019/243164 (26.12.2019 Gazette 2019/52)**

(54) **PROCÉDÉ DE MESURE DE LA HAUTEUR DE VAGUES À L'AIDE D'UN RADAR AÉROPORTÉ**

VERFAHREN ZUR MESSUNG DER WELLENHÖHE MITTELS EINES LUFTRADARS

METHOD FOR MEASURING WAVE HEIGHT BY MEANS OF AN AIRBORNE RADAR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.06.2018  FR 1800632**

(43) Date de publication de la demande:
**28.04.2021  Bulletin 2021/17**

(73) Titulaire: **THALES**
**92400 Courbevoie (FR)**

(72) Inventeurs:
• **BRETON, Pierre-Albert**
  **33700 Mérignac (FR)**
• **CORRETJA, Vincent**
  **33700 Mérignac (FR)**
• **MONTIGNY, Richard**
  **33700 Mérignac (FR)**
• **KEMKEMIAN, Stéphane**
  **78851 Elancourt Cedex (FR)**

(74) Mandataire: **Atout PI Laplace**
**Immeuble "Visium"**
**22, avenue Aristide Briand**
**94117 Arcueil Cedex (FR)**

(56) Documents cités:
**WO-A1-92/21041     FR-A1- 2 480 945**
**US-B1- 7 095 364**

• **RANEY R K ET AL: "An airborne cryosat prototype: the D2P radar altimeter", IGARSS 2002. IEEE 2002 INTERNATIONAL GEOSCIENCE AND REMOTE SENSING SYMPOSIUM. TORONTO, ONTARIO, CANADA, JUNE 24 -28, 2002; NEW YORK, NY : IEEE, US, vol. 3, 24 juin 2002 (2002-06-24), pages 1765-1767, XP010598349, ISBN: 978-0-7803-7536-9**

EP 3 811 109 B1

**Description**

*DOMAINE DE L'INVENTION*

L'invention se rapporte au domaine général de la surveillance maritime et des aéronefs chargés de telles opérations.

*Elle se rapporte notamment aux hydravions de surveillance maritime et aux problématiques liées aux conditions d'amerrissage et de mesure de hauteurs des vagues.*

*CONTEXTE DE L'INVENTION - ART ANTERIEUR*

Les radars de surveillances maritimes sont installés sur divers porteurs aériens, comme divulgué par le document US7095364, y compris sur certaines classes d'hydravions.

Pour amerrir en toute sécurité, ces hydravions doivent contrôler la hauteur des vagues afin de vérifier qu'elle est inférieure à un seuil de sécurité.

Aujourd'hui, cette hauteur est en général acquise via des infrastructures de mesures positionnées au niveau de la mer ou embarquées sur des navires et transmise à l'hydravion considéré.

Afin de gagner en autonomie, les opérationnels souhaitent disposer, à bord de l'aéronef, de moyens d'estimer de manière autonome la hauteur des vagues, notamment dans la zone d'amerrissage. Une telle autonomie permettrait plus de liberté dans la définition des missions et une plus grande flexibilité du plan de vol.

Aujourd'hui les installations radar permettant de mesurer la hauteur des vagues sont essentiellement des installations fixes comportant un radar de surface dédié de manière plus ou moins importante à cette tâche de mesure (voir, par exemple , le document WO9221041). Cependant, ces installations opèrent avec des contraintes très différentes de celles pouvant être imposées dans le contexte de l'invention. En particulier, le temps d'acquisition du signal permettant de calculer cette hauteur peut être de plusieurs minutes, durée incompatible du fonctionnement d'un radar embarqué.

Par suite, réaliser une mesure de la hauteur des vagues en utilisant le radar embarqué à bord nécessite de définir et concevoir une chaîne de traitement intégrée au radar aéroporté présentant les caractéristiques suivantes:

- Le temps d'analyse du signal doit être relativement court afin de ne pas contraindre la trajectoire de l'hydravion et de ne pas mobiliser le radar de manière prohibitive. Le temps d'analyse doit à ce titre être du même ordre que celui requis pour d'autres traitements tels que les traitements d'imagerie de cibles maritimes type ISAR ("Inverse Synthetic Aperture Radar" selon la dénomination anglo-saxonne), c'est-à-dire inférieur, typiquement, à la dizaine de secondes.
- L'altitude de l'aéronef à laquelle la hauteur des vagues est estimée doit être suffisamment haute, supérieure à 100 pieds typiquement, pour permettre une annulation de la manœuvre d'amerrissage en toute sécurité.
- Le traitement mis en œuvre doit fournir une mesure de la hauteur des vagues avec la précision attendue (erreur maximale sur l'estimation de la hauteur de vague de l'ordre de 50 cm) et de façon indépendante dans tous les contextes d'amerrissage. Sur les systèmes statiques, la précision de l'estimation de la hauteur de vague à un endroit donné repose en effet sur une calibration de la mesure à l'aide de capteurs externes (bouée) ce qui n'est pas envisageable dans le contexte d'un système embarqué que l'on souhaite autonome.

A l'heure actuelle il existe deux types connus de méthodes de traitements du signal radar permettant d'estimer la hauteur des vagues par analyse du signal rétrodiffusé par la surface de la mer avec un radar en bande X:

- Les méthodes fondées sur l'inversion de la Fonction de Transfert de Modulation, FTM, (ou " Modulation Transfer Function" (MTF) selon la dénomination anglo-saxonne);
- Les méthodes fondées sur l'analyse des fréquences Doppler du signal rétrodiffusé.

Le principe général des méthodes fondées sur l'inversion de la FTM du signal rétrodiffusé est de déterminer la hauteur des vagues à partir de la puissance des échantillons de fouillis ("clutter") de mer.

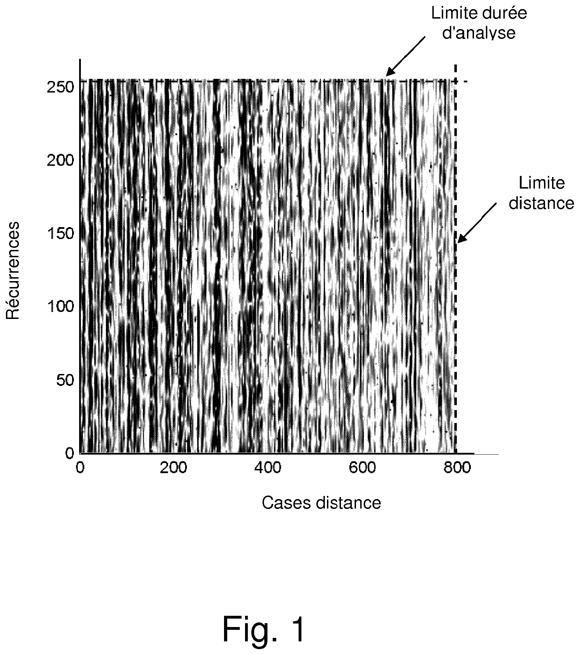

Pour ce faire, sur un temps de mesure donné, un radar capte un signal de fouillis ("clutter") de mer à partir duquel il forme une image correspondant à la répartition (distribution) de la puissance reçue dans un repère distance/temps (ou récurrences). Sur une telle image, présentée à titre d'illustration sur la figure 1, l'intensité de chaque pixel représente la puissance de signal reçu pour l'échantillon de signal correspondant une case distance donnée pour une récurrence donnée.

En présence de fouillis de mer, l'image ainsi construite est structurée selon des « zébrures » verticales, orientées selon l'axe des temps (axe récurrences) traduisant la présence de vagues à la surface de l'eau.

Conformément à cette méthode, on déduit la hauteur des vagues à partir cette structure, la hauteur des vagues étant accessible à travers la puissance du fouillis de mer.

Dans le contexte considéré, l'emploi d'une telle méthode présente certains inconvénients:

En premier lieu il s'agit d'une méthode, coûteuse d'un point de vue calculatoire, qui nécessite une étape intermédiaire de traitement.

En effet, la « prise de vue par le radar » entraine une distorsion de l'image créée, distorsion qui peut être modélisée par une fonction appelée « Modulation Transfer Function » (MTF).

Par suite la détermination précise de la hauteur des vagues nécessite l'estimation de cette MTF puis son inversion. La MTF inversée est ensuite appliquée à la transformée de Fourier 2D de l'image distance/temps formée à partir du signal radar reçu. Puis la transformée de Fourier inverse est appliqué à l'image ainsi obtenu par application de la MTF inversée de façon à obtenir une image distance/temps corrigée des distorsions à partir de laquelle les hauteurs des vagues sont estimées.

En second lieu, ce type de méthode nécessite une calibration. En effet le calcul de MTF dépend du contexte (lieu, altitude radar, etc.), de sorte que pour calibrer cette MTF, il faut des disposer de moyens sol (i.e. sur la mer) de ce type de méthode peu (voire pas du tout) compatible d'une utilisation mobile et autonome.

En troisième lieu, ce type de méthode permet de déterminer la hauteur des vagues seulement avec une précision limitée car il est basé sur l'hypothèse sous-jacente que la hauteur des vagues est proportionnelle à la puissance du fouillis de mer. Par ailleurs, la modulation de la puissance du signal due au "tilt" des vagues, est très sensible à l'altitude du capteur, et n'est donc pas particulièrement adaptée à la réalisation de mesure à partir d'un aéronef.

Enfin, en dernier lieu ce type de méthode, qui permet une estimation de la hauteur de vague pour chaque vague, apparait sur-spécifié vis-à-vis du besoin consistant à déterminer la hauteur moyenne des vagues dans une zone donnée.

Les méthodes fondées sur l'analyse des fréquences Doppler du signal rétrodiffusé sont quant à elles basées sur le fait que la hauteur significative des vagues peut être, de manière connue, corrélée avec l'écart-type des fréquences Doppler mesurée en un point donné d'une zone considérée.

Selon ce type de méthode, les fréquences Doppler du signal reçu en ce point sont calculées sur une durée donnée, de l'ordre de 15 minutes par exemple. Par ailleurs, de manière connue, la hauteur significative des vagues $h_s$ est reliée à l'écart-type $\sigma_v$, des vitesses (i.e. des fréquences doppler).

On rappelle ici que la hauteur significative des vagues $h_s$ représente la valeur moyenne de la hauteur du tiers des vague de plus grande hauteur sur la zone considérée et pendant la duré de l'observation effectuée.

Ce type de méthode offre une approche plus précise et plus simple à mettre en œuvre que les méthodes classiques, basées sur l'estimation de la MTF. Il présente cependant l'inconvénient de nécessiter un temps d'analyse incompatible d'une utilisation dans un contexte opérationnel tel qu'une manœuvre d'amerrissage; la durée d'analyse du fouillis de mer, qui nécessite l'asservissement de l'antenne dans une direction donnée, étant trop importante.

Par suite aucun des deux types de méthodes exposés précédemment ne donnant réellement satisfaction dans le contexte opérationnel particulier considéré ici, il existe à ce jour un besoin de trouver un moyen de traitements du signal radar permettant d'estimer de manière simple et rapide la hauteur des vagues.

### *PRESENTATION DE L'INVENTION*

Un but de l'invention est notamment de proposer un tel moyen, autrement dit, de proposer une méthode permettant d'estimer la hauteur des vagues à partir du signal capté par un radar aéroporté, ladite méthode prenant en compte les contraintes opérationnelles suivantes :

- le temps de réponse doit être court, typiquement inférieur à 10 secondes;
- le traitement mis en œuvre doit s'appliquer dans différents contextes maritimes sans nécessiter d'étape de calibration;
- la précision de l'estimation de la hauteur de vague doit être fiable et précise, et surtout éviter les risques de sous-estimation de la hauteur de vague.

A cet effet l'invention a pour objet un procédé pour déterminer la hauteur des vagues au moyen d'un radar porté par un aéronef, ledit procédé mettant en œuvre les étapes suivantes :

- une première étape de pointage de l'antenne du radar;

- une deuxième étape de détermination du plan d'acquisition du fouillis en fonction de l'altitude de l'aéronef;

- une troisième étape de détermination, pour chaque zone de fouillis définie par le plan d'acquisition, de deux paramètres Doppler PARA1 et PARA2 caractérisant ladite zone dans son ensemble;

- une quatrième étape de calcul, pour chacun des paramètres PARA1 et PARA2 calculés lors de la troisième étape, de la valeur moyenne dudit paramètre sur l'ensemble des zones considérées;

- une cinquième étape d'estimation proprement dite de la hauteur de vagues à partir des moyennes des paramètres PARA1 et PARA2 calculées lors de la quatrième étape.

La hauteur de vague ainsi estimée est destinée à être transmise à l'aéronef pour déterminer les conditions d'amerrissage de ce dernier

Selon la forme de mise en œuvre considérée le procédé selon l'invention peut présenter des caractéristiques complémentaires ou alternatives listées ci-après. Ces caractéristiques peuvent être considérées chacune séparément ou bien en combinaison avec une ou plusieurs autres caractéristiques.

Selon une première caractéristique, la troisième étape comporte elle-même trois sous-étapes:

- une première sous-étape d'acquisition du signal correspondant à la zone considérée;
- une deuxième sous-étape de prétraitement Doppler qui détermine la matrice des fréquences instantanées du signal reçu, représentée dans l'espace distance/temps (ou distance/récurrences);
- une troisième sous-étape de calcul, pour chaque zone, de la valeur de deux paramètres PARA1 et PARA2 à partir de la matrice des fréquences instantanées délivrée par la deuxième sous-étape.

Selon l'invention, le paramètre PARA1, correspondant à l'écart-type, sur l'ensemble des cases distance, des fréquences Doppler moyennes calculées pour chaque case distance, sur l'ensemble des récurrences formant la zone considérée. le paramètre PARA2, quant à lui, correspond au rapport du premier paramètre PARA1 sur l'écart-type de la fréquence Doppler moyenne du signal pour chaque récurrence.

Selon une autre caractéristique, la deuxième sous-étape de la troisième étape de prétraitement Doppler, met en œuvre:

- une première opération de calcul de la matrice des fréquences instantanées du signal représenté dans l'espace distance/temps (ou distance/récurrences);

  chaque fréquence Doppler instantanée $f_d$ de ladite matrice étant déterminée, pour chaque case distance et chaque récurrence définissant la zone considérée, à partir de la relation:

$$f_d = \frac{d\varphi \times PRF}{2*\pi}$$

  où PRF représente la période de récurrence du radar et où $d\varphi$ représente la différence de phase, pour une case distance donnée, entre les échantillons de fouillis reçus par le radar pour deux récurrences consécutives;

- une seconde opération de calcul d'une matrice des fréquences instantanées débruitée, ladite matrice étant obtenue en appliquant un filtre passe bas à la matrice des fréquences instantanées calculée par la première opération.

Selon une autre caractéristique, la cinquième étape réalise:

- le calcul, pour chacun des paramètres PARA1 et PARA2, d'une première estimation de hauteur de vague, $hest_{PARA1}$ et $hest_{PARA2}$ respectivement, le calcul étant réalisé pour chaque paramètre, en utilisant un estimateur donné qui exprime la hauteur de vague estimée en fonction de la valeur du paramètre considéré;

- l'élaboration d'une estimation consolidée, *Hest,* de la hauteur de vague, cette estimation étant fonction des premières estimations de hauteurs de vague $hest_{PARA1}$ et $hest_{PARA2}$ précédemment calculées.

Selon une autre caractéristique, les premières estimations de hauteurs de vague $hest_{PARA1}$ et $hest_{PARA2}$, sont déterminées par la relation:

$$hest_P = A \times p + B,$$

où p est la valeur du paramètre considéré, PARA1 ou PARA2.

Selon une autre caractéristique, l'estimation consolidée de la hauteur de vague est définie comme étant égale à la plus grande des premières estimations de hauteurs de vague $hest_{PARA1}$ et $hest_{PARA2}$:

$$Hest = max(hest_{PARA1}, hest_{PARA2})$$

Selon une autre caractéristique, l'estimation consolidée de la hauteur de vague est définie comme étant égale à la moyenne des premières estimations de hauteur de vague $hest_{PARA1}$ et $hest_{PARA2}$.

Selon une autre caractéristique, l'estimation consolidée de la hauteur de vague est définie comme étant égale à une somme pondérée des premières estimations de hauteur de vague $hest_{PARA1}$ et $hest_{PARA2}$.

## DESCRIPTION DES FIGURES

Les caractéristiques et avantages de l'invention seront mieux appréciés grâce à la description qui suit, description qui s'appuie sur les figures annexées qui présentent:

la figure 1, une image simplifiée, monochrome représentant graphiquement un exemple de matrice des puissances de signal reçu, mesurées pour une zone de l'espace (cases distance-récurrences) de taille donnée.
la figure 2, un organigramme de principe présentant les différentes étapes du procédé selon l'invention;
la figure 3, un organigramme de principe détaillant la troisième étape du procédé selon l'invention;
la figure 4, une image simplifiée, monochrome représentant graphiquement la matrice des fréquences doppler instantanées corrigée, obtenue, selon l'invention, par prétraitement de la matrice illustrée par la figure 3;
la figure 5, un organigramme de principe détaillant la cinquième étape du procédé selon l'invention.

Il est à noter que, sur les figures annexées, un même élément fonctionnel ou structurel porte de préférence un même symbole repère.

## DESCRIPTION DETAILLEE

Le procédé selon l'invention détermine la hauteur de la mer en se basant sur la mesure de la fréquence Doppler du fouillis de mer ou "clutter".

Ce mode de détermination exploite le fait que les vagues génèrent une modulation de la vitesse mesurée car elles introduisent, par gravité, des variations de vitesse mesurée à la surface de la mer.

La fréquence Doppler, qui est une valeur intrinsèque du fouillis de mer, dont la valeur n'est impactée ni par le radar ni par sa position, est en effet une grandeur dont la variabilité de la mesure est très faible. Sa mesure ne présente pas les inconvénients cités précédemment, de sorte qu'elle semble mieux adaptée aux conditions d'une mesure effectuée depuis un aéronef.

On rappelle à ce propos que la vitesse radiale du fouillis, $V_r$, est liée à la fréquence Doppler par la relation suivante:

$$f_d = V_r \cdot (2/\lambda) \qquad [02]$$

où $\lambda$ représente la longueur d'onde de l'onde radar émise.

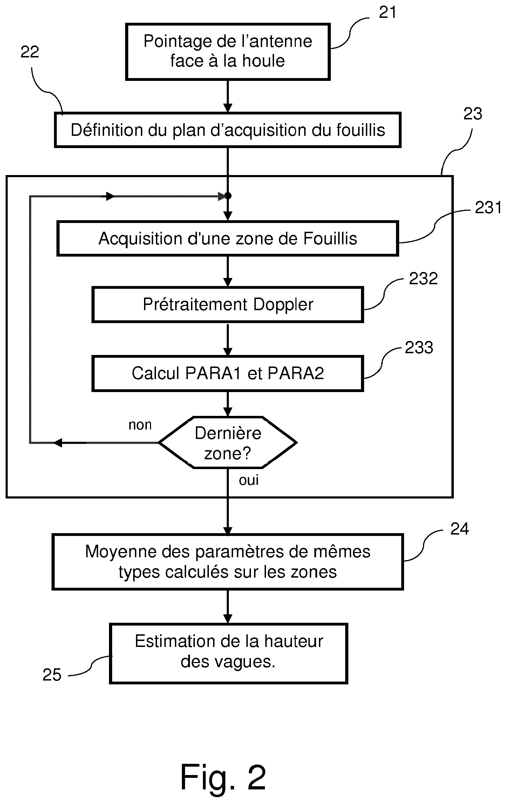

Comme l'illustre la figure 2, le procédé selon l'invention met en œuvre les étapes de traitements suivantes :

- une première étape 21 de pointage de l'antenne;

- une deuxième étape 22 de détermination du plan d'acquisition du fouillis en fonction de l'altitude de l'aéronef;

- une troisième étape 23 de détermination, pour chaque zone de fouillis définie par le plan d'acquisition, de deux paramètres Doppler PARA1 et PARA2 caractérisant ladite zone.

- une quatrième étape 24 de calcul, pour chaque paramètre, PARA1 ou PARA2, de la valeur moyenne sur l'ensemble des zones du paramètre considéré, calculé à l'étape 23;

- une cinquième étape 25 d'estimation proprement dite de la hauteur de vagues à partir des moyennes des paramètres PARA1 et PARA2 calculées lors de l'étape 24.

La première étape 21 de pointage de l'antenne consiste à garantir que la direction visée par le radar correspond à la direction d'origine de la houle (avec une tolérance de l'ordre de 20°). Cette étape, qui peut être implémentée par tout moyen connu de l'homme du métier, n'est par ailleurs pas détaillée dans le contexte de la présente invention.

La deuxième étape 22 réalise la détermination du plan d'acquisition du fouillis. Ce plan définit, en fonction de l'altitude de l'aéronef, le nombre de zones à acquérir, la durée d'acquisition pour chaque zone ainsi que la position et la longueur des zones.

Selon l'invention, les dimensions des zones sont définies de façon à permettre une analyse des corrélations spatio-temporelles du fouillis.

Plus précisément une zone est dimensionnée de façon à contenir plusieurs pseudo-périodes de houle. Chaque zone peut ainsi par exemple présenter une longueur supérieure ou égale à 1000 mètres.

Par ailleurs, la durée d'acquisition pour une zone donnée est liée à l'hypothèse de stationnarité du fouillis sur la durée d'acquisition et doit donc être typiquement inférieure à 0,5 secondes.

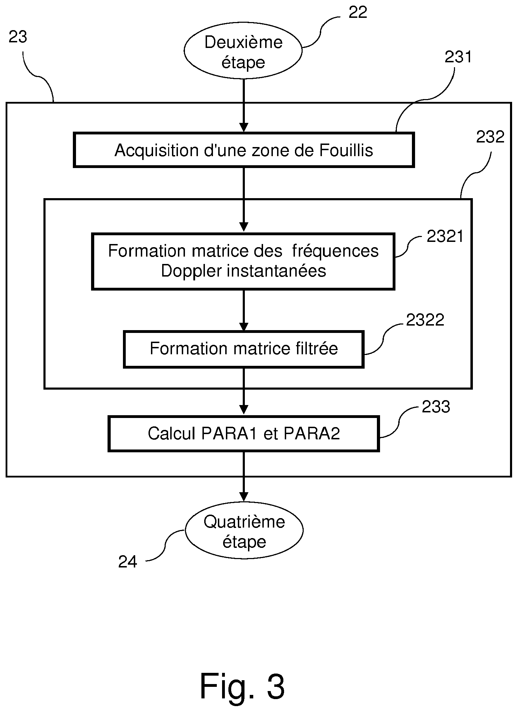

La troisième étape 23, illustrée par la figure 3, est une étape itérative dont la fonction consiste à déterminer, pour chacune des zones définies par le plan d'acquisition, la valeur de deux paramètres PARA1 et PARA2, fonctions de la fréquence doppler du fouillis mesuré sur la zone considérée. Cette troisième étape comporte elle-même trois sous-étapes:

- une première sous-étape 231 d'acquisition du signal correspondant à la zone considérée;

- une deuxième sous-étape 232 de prétraitement Doppler qui met en œuvre:

- une première opération 2321 de calcul de la matrice des fréquences instantanées du signal représenté dans l'espace distance/temps (ou distance/récurrences);

- une seconde opération 2322 de calcul de la matrice des fréquences instantanées débruitée;

- une troisième sous-étape 233 de calcul, pour chaque zone, de la valeur de deux paramètres PARA1 et PARA2 à partir de la matrice des fréquences instantanées débruitée;

L'acquisition, au cours de la troisième sous-étape 231, du signal réfléchi par chaque zone, est réalisée de manière classique et n'est pas détaillée ici. On précise cependant, que cette acquisition est réalisée en effectuant la compensation du déplacement du radar de façon à ce qu'un même élément de fouillis soit localisé à la même distance pendant toute la durée d'acquisition.

Selon l'invention, le signal acquis au cours de la première sous-étape 231 de l'étape 23, qui correspond à une zone de fouillis donnée caractérisée par un nombre de cases distance (Ncd) qui correspond au nombre de cases distance sur l'intervalle de distance étudié, et un nombre de récurrence (Nrec) qui correspond au nombre de récurrences émises durant la durée analysée. Pour chacun des couples case distance/récurrence, le radar détermine un échantillons de fouillis sous forme d'une amplitude complexe.

A partir de ces échantillons, on détermine la fréquence Doppler instantanée (i.e. la fréquence doppler mesurée pour chaque case distance et une récurrence donnée) en appliquant la formule suivante :

$$f_d = \frac{d\varphi \times PRF}{2 * \pi} \qquad\qquad [03]$$

où le facteur PRF ("Pulse Repetition Frequency" selon la dénomination anglo-saxonne) représente la période de répétition, ou de récurrence, du radar une période égale à 1950 Hz par exemple et correspond au nombre de récurrence émis en une seconde;
et où $d\varphi$ est la différence de phase, pour une case distance donnée, entre les échantillons de fouillis (i.e. échantillons du signal reçu par le radar) mesurés pour deux récurrences consécutives.

La constitution de la matrice des fréquences instantanées dans l'espace distance/temps (ou distance/récurrences) formée par l'ensemble des fréquences doppler instantanées calculées pour toute les case distance de la zone considérée et pour toutes les récurrences de la période d'analyse est réalisée par la première opération 2321 de la sous-étape 232.

La matrice ainsi obtenue est cependant difficilement exploitable en l'état. En effet, la variation de la fréquence Doppler de case à case et de récurrence à récurrence apparait fortement bruitée de sorte qu'il est difficile de déterminer une hauteur de vague à partir des variations de fréquence doppler.

Pour pallier cet inconvénient, la sous-étape 232 du procédé selon l'invention met en œuvre une seconde opération 2322, dont l'objet est de renforcer le contraste de l'image représentée par la matrice obtenue après mise en œuvre de l'opération 2321.

Cette seconde opération réalise la construction d'une matrice des fréquences instantanées débruitée, c'est-à-dire une matrice expurgée du bruit provoqué, notamment, par la forte variabilité du fouillis de mer.

Cette matrice expurgée est obtenue en appliquant une fonction de filtrage passe-bas consistant, par exemple, à réaliser la convolution de la matrice des fréquences instantanées obtenue après exécution de l'opération 1321 avec une matrice multiple de la matrice unité, dont les coefficients sont tous égaux, par exemple une matrice 5 par 11 dont tous les coefficients valent 1/55.

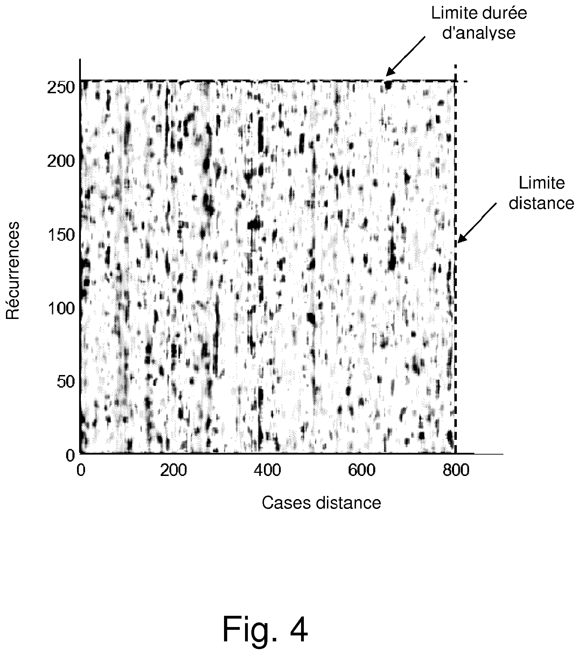

On obtient ainsi, comme l'illustre la représentation de la figure 4, une matrice des fréquences instantanées corrigée qui laisse apparaitre des variations de fréquence doppler plus franches laissant apparaitre des cases distances pour lesquelles la fréquence doppler est plus élevée (lignes en noir sur la figure 4) et d'autres ou elle est plus faible .

Selon l'invention également, les deux paramètres PARA1 et PARA2, calculés au cours de la troisième sous-étape 233, permettent avantageusement d'exploiter au mieux les corrélations entre la modulation de la fréquence Doppler instantanée du signal de fouillis réfléchi par la mer et la hauteur de vagues.

Le premier paramètre, PARA1, correspond à l'écart-type des fréquences Doppler moyennes calculées pour chaque case distance, sur l'ensemble des récurrences. Ce paramètre est déterminé en deux temps:

- un premier temps durant lequel on effectue le calcul, pour chaque case distance, de la fréquence Doppler moyenne sur l'ensemble des récurrences définissant la zone considérée, $\widehat{fd}_{icd}$ , définie par la relation suivante:

$$\widehat{fd}_{icd} = \frac{1}{Nrec} \times \sum_{irec=1}^{Nrec} fd_{icd,irec} \qquad [04]$$

où $fd_{icd,irec}$ représente la fréquence Doppler filtrée (filtrage passe bas) associée à la case distance icd et à la récurrence irec.

- un second temps durant lequel on effectue le calcul du paramètre PARA1 proprement dit, ce premier paramètre étant défini par la relation suivante:

$$PARA1 = \sqrt{\frac{1}{Ncd} \times \sum_{icd=1}^{icd=Ncd} \left(\widehat{fd}_{icd} - \widehat{\widehat{fd}}_{cd}\right)^2} \qquad [05]$$

où $\widehat{\widehat{fd}}_{cd}$ représente la valeur moyenne des valeurs $\widehat{fd}_{icd}$ .

Le second paramètre, PARA2, correspond au rapport du premier paramètre PARA1 sur l'écart-type de la fréquence Doppler moyenne pour chaque récurrence. Ce second paramètre est également déterminé en deux temps:

- un premier temps durant lequel on effectue le calcul, pour chaque de la fréquence Doppler moyenne pour chaque récurrence $\widehat{fd}_{irec}$ définie par la relation suivante:

$$\widehat{fd}_{irec} = \frac{1}{Ncd} \times \sum_{icd=1}^{icd=Ncd} fd_{icd,irec} \qquad [06]$$

- un second temps durant lequel on effectue le calcul du paramètre PARA2 proprement dit, ce premier paramètre étant défini par la relation suivante:

$$PARA2 = \frac{PARA1}{\sqrt{\frac{1}{Nrec} \times \sum_{irec=1}^{irec=Nrec}\left(\widehat{fd}_{irec} - \widehat{\widehat{fd}}_{rec}\right)^2}} \qquad [07]$$

où $\widehat{\widehat{fd}}_{rec}$ représente la valeur moyenne des valeurs $\widehat{fd}_{irec}$ .

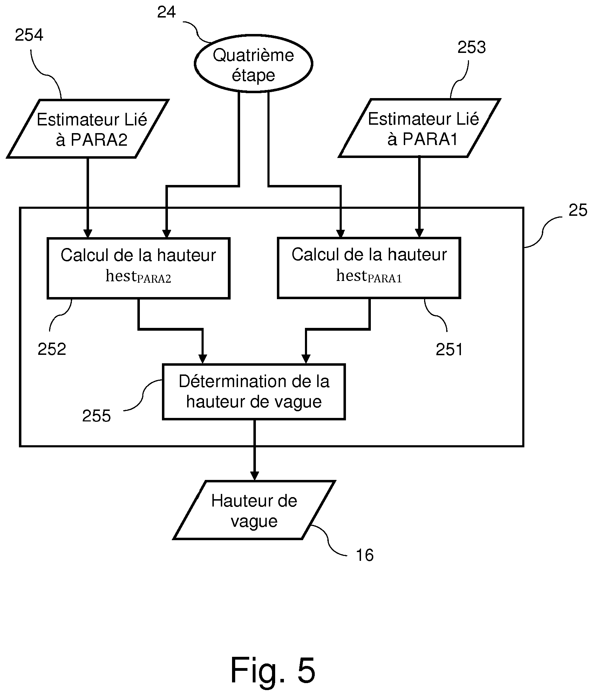

La cinquième étape 25, illustrée par la figure 5, réalise l'estimation proprement dite de la hauteur de vagues à partir des paramètres PARA1 et PARA2 calculés au cours de l'étape 23 du procédé selon l'invention. La hauteur de vague 26 ainsi estimée est prise en compte par l'aéronef lors de la phase d'amerrissage, notamment pour déterminer si les conditions limites de hauteur de vague permettant l'amerrissage ne sont pas dépassées.

Cette estimation est précédée de l'étape 24 du calcul de la valeur moyenne de chacun des paramètres PARA1 et PARA2 sur l'ensemble des zones considérées, la prise en compte d'une valeur moyenne permet avantageusement d'obtenir, pour chacun des paramètres, une valeur unique plus fiable.

Pour chacun des paramètres PARA1 et PARA2, l'étape 25 du procédé selon l'invention met en œuvre des estimateurs, 253 et 254 reliant la valeur du paramètre considéré, PARA1 ou PARA2 respectivement, à la hauteur de vague.

On effectue ainsi le calcul, pour chacun des paramètres PARA1 et PARA2, d'une première estimation de la hauteur de vague, $hest_{PARA1}$ et $hest_{PARA2}$ respectivement, le calcul étant réalisé pour chaque paramètre, en utilisant un estimateur donné qui exprime la hauteur de vague estimée en fonction de la valeur du paramètre considéré

Selon l'invention, ces estimateurs 253 et 254 sont déterminés préalablement lors d'une phase d'apprentissage

Ils peuvent suivre différents modèles (linéaire, polynomial...). Dans le cas d'un estimateur linéaire, la hauteur de vague estimée, $hest_p$, est par exemple déterminée, à partir de la valeur $p$ du paramètre considéré (i.e. PARA1 ou PARA2), par la relation suivante:

$$hest_P = A \times p + B, \qquad\qquad [08]$$

où A et B représente les coefficients du modèle, préalablement déterminés.

Par suite, la hauteur estimée, *Hest,* est déterminée à partir des premières estimations $hest_P$ calculées, au cours des opérations 251 et 252, à partir des estimateurs 253 et 254 choisis.

Selon l'invention la hauteur estimée 26 peut être obtenue de différentes façons.

Ainsi, par exemple:

- dans une forme particulière du procédé selon l'invention, la hauteur estimée 26 est obtenue en comparant les premières estimations des hauteurs de vague $hest_{PARA1}$ et $hest_{PARA2}$ délivrées par chacun des estimateurs et en retenant la valeur la plus forte. On a alors:

$$Hest = max(hest_{PARA1}, hest_{PARA2}); \qquad\qquad [09]$$

- dans une forme de mise en œuvre alternative, la hauteur de vague estimée 26 est obtenue en calculant la moyenne des premières estimations des hauteurs de vague $hest_{PARA1}$ et $hest_{PARA2}$ délivrées par chacun des estimateurs;

- dans une autre forme de mise en œuvre alternative, la hauteur de vague estimée 26 est obtenue en réalisant une somme pondérée des premières estimations des hauteurs de vague $hest_{PARA1}$ et $hest_{PARA2}$ délivrées par chacun des estimateurs.

**Revendications**

1. Procédé pour déterminer la hauteur des vagues à l'aide d'un radar porté par un aéronef, **caractérisé en ce qu'**il met en œuvre les étapes suivantes :

   - une première étape (21) de pointage de l'antenne du radar, ledit pointage étant effectué de telle façon que la direction visée par le radar corresponde à la direction d'origine de la houle;
   - une deuxième étape (22) de détermination du plan d'acquisition du fouillis, ledit plan définissant, en fonction de l'altitude de l'aéronef, le nombre de zones à acquérir, la durée d'acquisition pour chaque zone ainsi que la position et la longueur des zones;
   - une troisième étape (23) de détermination, pour chaque zone de fouillis définie par le plan d'acquisition, de deux paramètres PARA1 et PARA2 correspondant respectivement, pour une zone donnée, à l'écart-type des fréquences Doppler moyennes calculées, pour chaque case distance, sur l'ensemble des récurrences formant la zone considérée et au rapport du premier paramètre PARA1 sur l'écart-type des fréquence Doppler moyenne calculé pour chaque récurrence sur l'ensemble des cases distances formant la zone considérée;
   - une quatrième étape (24) de calcul, pour chacun des paramètres PARA1 et PARA2 calculés lors de la troisième étape (23), de la valeur moyenne dudit paramètre sur l'ensemble des zones considérées;
- une cinquième étape (25) d'estimation proprement dite de la hauteur de vagues (26) à partir des moyennes des paramètres PARA1 et PARA2 calculées lors de la quatrième étape (24);

la hauteur de vague (26) ainsi estimée étant transmise à l'aéronef pour déterminer les conditions d'amerrissage de ce dernier

**2.** Procédé selon la revendication 1, **caractérisé en ce que** la troisième étape (23) comporte elle-même trois sous-étapes:

- une première sous-étape (231) d'acquisition du signal correspondant à la zone considérée;
- une deuxième sous-étape (232) de prétraitement Doppler qui détermine la matrice des fréquences instantanées du signal reçu, représentée dans l'espace distance/temps (ou distance/récurrences);
- une troisième sous-étape (233) de calcul, pour chaque zone, de la valeur des deux paramètres PARA1 et PARA2 à partir de la matrice des fréquences instantanées délivrée par la deuxième sous-étape (232).

**3.** Procédé selon la revendication 2, **caractérisé en ce que** la deuxième sous-étape (232) de la troisième étape (23) de prétraitement Doppler, met en œuvre:

- une première opération (2321) de calcul de la matrice des fréquences instantanées du signal représenté dans l'espace distance/temps (ou distance/récurrences);

chaque fréquence Doppler instantanée $f_d$ de ladite matrice étant déterminée, pour chaque case distance et chaque récurrence définissant la zone considérée, à partir de la relation:

$$f_d = \frac{d\varphi \times PRF}{2*\pi}$$ [03]

où PRF représente la période de récurrence du radar et où $d\varphi$ représente la différence de phase, pour une case distance donnée, entre les échantillons de fouillis reçus par le radar pour deux récurrences consécutives;

- une seconde opération (2322) de calcul d'une matrice des fréquences instantanées débruitée, ladite matrice étant obtenue en appliquant un filtre passe bas à la matrice des fréquences instantanées calculée par la première opération (2321).

**4.** Procédé selon l'une quelconque des revendications 1 à 3, **caractérisé en ce que** la cinquième étape (25) réalise:

- le calcul, pour chacun des paramètres PARA1 et PARA2, d'une première estimation de hauteur de vague, $hest_{PARA1}$ et $hest_{PARA2}$ respectivement, le calcul étant réalisé pour chaque paramètre, en utilisant un estimateur donné qui exprime la hauteur de vague estimée en fonction de la valeur du paramètre considéré;
- l'élaboration d'une estimation consolidée, *Hest,* de la hauteur de vague, cette estimation (26) étant fonction des premières estimations de hauteurs de vague $hest_{PARA1}$ et $hest_{PARA2}$ précédemment calculées.

**5.** Procédé selon la revendication 4, **caractérisé en ce que** les premières estimations des hauteurs de vague $hest_{PARA1}$ et $hest_{PARA2}$, sont déterminées au moyen d'estimateurs linéaires par la relation:

$$hest_P = A \times p + B,$$

où p est la valeur du paramètre considéré, PARA1 ou PARA2 et où A et B représentent les coefficients, préalablement déterminés, de l'estimateur considéré.

**6.** Procédé selon l'une des revendications 4 ou 5, **caractérisé en ce que** l'estimation consolidée de la hauteur de vague (26) est définie comme étant égale à la plus grande des premières estimations de hauteurs de vague $hest_{PARA1}$ et $hest_{PARA2}$:

$$Hest = max(hest_{PARA1}, hest_{PARA2})$$

7. Procédé selon l'une des revendications 4 ou 5, **caractérisé en ce que** l'estimation consolidée de la hauteur de vague (26) est définie comme étant égale à la moyenne des premières estimations de hauteur de vague $hest_{PARA1}$ et $hest_{PARA2}$.

8. Procédé selon l'une des revendications 4 ou 5, **caractérisé en ce que** l'estimation consolidée de la hauteur de vague (26) est définie comme étant égale à une somme pondérée des premières estimations de hauteur de vague $hest_{PARA1}$ et $hest_{PARA2}$.


**Patentansprüche**

1. Verfahren zum Bestimmen der Höhe von Wellen mit Hilfe eines Radars an Bord eines Luftfahrzeugs, **dadurch gekennzeichnet, dass** es die folgenden Schritte ausführt:

   - einen ersten Schritt (21) des Ausrichtens der Radarantenne, wobei das Ausrichten so erfolgt, dass die Zielrichtung des Radars der Ursprungsrichtung des Seegangs entspricht;
   - einen zweiten Schritt (22) des Bestimmens des Plans zur Erfassung des Scrambles, wobei der Plan als eine Funktion der Höhe des Flugzeugs die Anzahl der zu erfassenden Zonen, die Dauer der Erfassung für jede Zone sowie die Position und die Länge der Zonen definiert;
   - einen dritten Schritt (23) des Bestimmens, für jede durch den Erfassungsplan definierte Zone des Scrambles, von zwei Parametern PARA1 und PARA2, die für eine gegebene Zone jeweils der Standardabweichung der mittleren Dopplerfrequenzen, die für jedes Distanzfeld über die Gesamtheit der die betrachtete Zone bildenden Wiederholungen berechnet wurden, und dem Verhältnis des ersten Parameters PARA1 zur Standardabweichung der mittleren Dopplerfrequenzen, die für jede Wiederholung über die Gesamtheit der die betrachtete Zone bildenden Entfernungsfelder berechnet wurden, entsprechen;
   - einen vierten Schritt (24) des Berechnens, für jeden der im dritten Schritt (23) berechneten Parameter PARA1 und PARA2, des Mittelwerts des Parameters über die Gesamtheit der betrachteten Zonen;
   - einen fünften Schritt (25) des eigentlichen Schätzens der Höhe (26) von Wellen anhand der Mittelwerte der im vierten Schritt (24) berechneten Parameter PARA1 und PARA2;

   wobei die so geschätzte Wellenhöhe (26) zum Luftfahrzeug übertragen wird, um die Wasserlandebedingungen für Letzteres zu bestimmen.

2. Verfahren nach Anspruch 1, **dadurch gekennzeichnet, dass** der dritte Schritt (23) wiederum drei Unterschritte aufweist:

   - einen ersten Unterschritt (231) des Erfassens des Signals, das der betrachteten Zone entspricht;
   - einen zweiten Unterschritt (232) der Doppler-Vorverarbeitung, der die Matrix der momentanen Frequenzen des empfangenen Signals bestimmt, die im Abstand/Zeit- (oder Distanz/Wiederholung-) Raum dargestellt wird;
   - einen dritten Unterschritt (233) des Berechnens, für jede Zone, des Wertes der beiden Parameter PARA1 und PARA2 aus der Matrix der durch den zweiten Unterschritt (232) gelieferten momentanen Frequenzen.

3. Verfahren nach Anspruch 2, **dadurch gekennzeichnet, dass** der zweite Unterschritt (232) des dritten Doppler-Vorverarbeitungsschrittes (23) Folgendes durchführt:

   - ein erster Vorgang (2321) des Berechnens der Matrix der momentanen Frequenzen des im Abstand/Zeit- (oder Abstand/Wiederholung-) Raum dargestellten Signals;

   wobei die momentane Dopplerfrequenz $f_d$ der Matrix für jedes Distanzfeld und jede Wiederholung, die die betrachtete Zone definieren, aus der folgenden Beziehung bestimmt wird:

$$f_d = \frac{d\varphi x PRF}{2*\pi} \qquad\qquad [03]$$

wobei PRF die Wiederholungsperiode des Radars darstellt und wobei $d\varphi$ die Phasendifferenz, für ein gegebenes Distanzfeld, zwischen den vom Radar erfassten Scramble-Proben für zwei aufeinanderfolgende Wiederholungen darstellt;

- eine zweite Operation (2322) des Berechnens einer entrauschten Momentanfrequenzmatrix, wobei die Matrix durch Anwenden eines Tiefpassfilters auf die durch die erste Operation (2321) berechnete Momentanfrequenzmatrix erhalten wird.

4. Verfahren nach einem der Ansprüche 1 bis 3, **dadurch gekennzeichnet, dass** der fünfte Schritt (25) Folgendes durchführt:

- Berechnen, für jeden der Parameter PARA1 und PARA2, einer ersten Wellenhöhenschätzung, $hest_{PARA1}$ bzw. $hest_{PARA2}$, wobei die Berechnung für jeden Parameter unter Verwendung eines gegebenen Schätzers durchgeführt wird, der die geschätzte Wellenhöhe als Funktion des Wertes des betrachteten Parameters ausdrückt;
- Erstellen einer konsolidierten Schätzung $Hest$ der Wellenhöhe, wobei diese Schätzung (26) eine Funktion der zuvor berechneten ersten Wellenhöhenschätzungen $hest_{PARA1}$ und $hestp_{ARA2}$ ist.

5. Verfahren nach Anspruch 4, **dadurch gekennzeichnet, dass** die ersten Wellenhöhenschätzungen $hest_{PARA1}$ und $hest_{PARA2}$ mittels linearen Schätzern durch die folgende Beziehung bestimmt werden:

$$hest_p = A \; x \; p + B,$$

wobei $p$ der Wert des betrachteten Parameters PARA1 oder PARA2 ist, und wobei A und B die zuvor bestimmten Koeffizienten des betrachteten Schätzers sind.

6. Verfahren nach Anspruch 4 oder 5, **dadurch gekennzeichnet, dass** die konsolidierte Schätzung der Wellenhöhe (26) als gleich der größten der ersten Wellenhöhenschätzungen $hest_{PARA1}$ und $hestp_{ARA2}$ definiert wird:

$$Hest = max(hest_{PARA1}, hest_{PARA2}).$$

7. Verfahren nach Anspruch 4 oder 5, **dadurch gekennzeichnet, dass** die konsolidierte Schätzung der Wellenhöhe (26) als gleich dem Mittelwert der ersten Wellenhöhenschätzungen $hest_{PARA1}$ und $hestp_{ARA2}$ definiert wird.

8. Verfahren nach Anspruch 4 oder 5, **dadurch gekennzeichnet, dass** die konsolidierte Schätzung der Wellenhöhe (26) als gleich einer gewichteten Summe der ersten Wellenhöhenschätzungen $hest_{PARA1}$ und $hestp_{ARA2}$ definiert ist.

**Claims**

1. A method for determining wave height using a radar carried by an aircraft, **characterised in that** it implements the following steps:

- a first step (21) of pointing the antenna of the radar, said pointing being carried out in such a way that the direction targeted by the radar corresponds to the direction of origin of the swell;
- a second step (22) of determining the clutter acquisition plan, said plan defining, as a function of the altitude of the aircraft, the number of zones to be acquired, the acquisition duration for each zone, as well as the position and the length of the zones;
- a third step (23) of determining, for each clutter zone defined by the acquisition plane, two parameters PARA1 and PARA2, respectively corresponding, for a given zone, to the standard deviation of the computed average Doppler frequencies, for each distance box, over all the recurrences forming the considered zone and at the ratio of the first parameter PARA1 to the standard deviation of the average Doppler frequency computed for each recurrence over all the distances boxes forming the considered zone;
- a fourth step (24) of computing, for each of the parameters PARA1 and PARA2 computed during the third step (23), the average value of said parameter over all the considered zones;
- a fifth step (25) of actually estimating the wave height (26) on the basis of the averages of the parameters PARA1 and PARA2 computed during the fourth step (24);

with the wave height (26) thus estimated being transmitted to the aircraft in order to determine the conditions for landing said aircraft on water.

2. The method according to claim 1, **characterised in that** the third step (23) itself has three sub-steps:

- a first sub-step (231) of acquiring the signal corresponding to the considered zone;
- a second sub-step (232) of Doppler pre-processing that determines the matrix of the instantaneous frequencies of the received signal, represented in the distance/time (or distance/recurrence) space;
- a third sub-step (233) of computing, for each zone, the value of the two parameters PARA1 and PARA2 on the basis of the matrix of the instantaneous frequencies delivered by the second sub-step (232).

3. The method according to claim 2, **characterised in that** the second sub-step (232) of the third step (23) of Doppler pre-processing implements:

- a first operation (2321) of computing the matrix of the instantaneous frequencies of the signal represented in the distance/time (or distance/recurrence) space;

with each instantaneous Doppler frequency $f_d$ of said matrix being determined, for each distance box and each recurrence defining the considered zone, on the basis of the following relation:

$$f_d = \frac{d\varphi\, x\, PRF}{2 * \pi} \qquad\qquad [03]$$

where PRF represents the recurrence period of the radar and where $d\varphi$ represents the phase difference, for a given distance box, between the clutter samples received by the radar for two consecutive recurrences;

- a second operation (2322) of computing a matrix of the denoised instantaneous frequencies, with said matrix being obtained by applying a low-pass filter to the matrix of the instantaneous frequencies computed by the first operation (2321).

4. The method according to any one of claims 1 to 3, **characterised in that** the fifth step (25) implements:

- computing, for each of the parameters PARA1 and PARA2, of a first estimate of wave height, $hest_{PARA1}$ and $hestp_{ARA2}$ respectively, with the computing being carried out for each parameter, using a given estimator that expresses the estimated wave height as a function of the value of the considered parameter;
- preparing a consolidated estimate, $Hest,$ of the wave height, with this estimate (26) being a function of the first previously computed estimates of wave heights $hest_{PARA1}$ and $hest_{PARA2}$.

5. The method according to claim 4, **characterised in that** the first estimates of the wave heights $hest_{PARA1}$ and $hest_{PARA2}$ are determined by means of linear estimators by the relation:

$$hest_p = A\ x\ p + B,$$

where p is the value of the considered parameter, PARA1 or PARA2, and where A and B represent the previously determined coefficients of the considered estimator.

6. The method according to any of claims 4 or 5, **characterised in that** the consolidated estimate of the wave height (26) is defined as being equal to the largest of the first wave height estimates $hest_{PARA1}$ and $hest_{PARA2}$:

$$Hest = max(hest_{PARA1}, hest_{PARA2}).$$

7. The method according to any of claims 4 or 5, **characterised in that** the consolidated estimate of the wave height (26) is defined as being equal to the average of the first estimates of wave height $hest_{PARA1}$ and $hest_{PARA2}$.

8. The method according to any of claims 4 or 5, **characterised in that** the consolidated estimate of the wave height (26) is defined as being equal to a weighted sum of the first estimates of wave height $hest_{PARA1}$ and $hest_{PARA2}$.

Fig. 1

```
                                      ┌─────────────────────────┐  ⌐ 21
                                      │   Pointage de l'antenne  │
              22                      │      face à la houle     │
                                      └─────────────────────────┘
                                                   │
                                                   ▼
              ┌──────────────────────────────────────────────┐   ⌐ 23
              │ Définition du plan d'acquisition du fouillis   │
              └──────────────────────────────────────────────┘
                                      │
              ┌───────────────────────┼──────────────────────────┐
              │   ┌──────────────────▼──────────────┐   ⌐ 231    │
              │   │  Acquisition d'une zone de Fouillis │          │
              │   └─────────────────────────────────┘             │
              │                       │                            │
              │          ┌───────────▼──────────┐   ⌐ 232         │
              │          │  Prétraitement Doppler │                │
              │          └──────────────────────┘                 │
              │                       │                            │
              │          ┌───────────▼──────────┐   ⌐ 233         │
              │          │  Calcul PARA1 et PARA2 │                │
              │          └──────────────────────┘                 │
              │      non          │                                │
              │   ◄───────   ╱ Dernière ╲                          │
              │              ╲   zone?   ╱                         │
              │                   │ oui                            │
              └───────────────────┼────────────────────────────────┘
                                  ▼
              ┌──────────────────────────────────────────┐   ⌐ 24
              │  Moyenne des paramètres de mêmes           │
              │   types calculés sur les zones             │
              └──────────────────────────────────────────┘
                                  │
                                  ▼
              ┌──────────────────────────────────────────┐
              │    Estimation de la hauteur                │
              │         des vagues.                        │
    25 ───    └──────────────────────────────────────────┘
```

# Fig. 2

22

23

231

Deuxième
étape

232

Acquisition d'une zone de Fouillis

Formation matrice des  fréquences
Doppler instantanées

2321

Formation matrice filtrée

2322

Calcul PARA1 et PARA2

233

Quatrième
étape

24

Fig. 3

Fig. 4

254

24

253

Quatrième
étape

Estimateur Lié
à PARA2

Estimateur Lié
à PARA1

25

Calcul de la hauteur
$hest_{PARA2}$

Calcul de la hauteur
$hest_{PARA1}$

252

251

Détermination de la
hauteur de vague

255

Hauteur de
vague

16

# Fig. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7095364 B

- WO 9221041 A